# EUROPÄISCHE PATENTSCHRIFT

(11) **EP 0 355 205 B1**
(45) Veröffentlichungstag und Bekanntmachung des Hinweises auf die Patenterteilung: **19.01.1994**
(21) Anmeldenummer: 88201740.3
(22) Anmeldetag: 16.08.1988
(51) Int. Cl.: H01G 9/02

(54) **Elektrolytkondensator**
Electrolytic capacitor
Condensateur électrolytique

(43) Veröffentlichungstag der Anmeldung: 28.02.1990
(73) Patentinhaber: Philips Electronics N.V., 5621 BA Eindhoven (NL)
(72) Erfinder: Stüfler, Siegfried c/o INT. OCTROOIBUREAU B.V., NL-5656 AA Eindhoven (NL); Hetzendorf, Georg c/o INT. OCTROOIBUREAU B.V., NL-5656 AA Eindhoven (NL); Fransen, Benedictus C.H., NL-5656 AA Eindhoven (NL); Rijnbeek, Antonius G. c/o INT. OCTROOIBUREAU B.V., NL-5656 AA Eindhoven (NL); Schmickl, Helfried c/o INT. OCTROOIBUREAU B.V., NL-5656 AA Eindhoven (NL)
(74) Vertreter: Pennings, Johannes

(56) Entgegenhaltungen:
- EP-A- 0 152 082
- DE-A- 859 338
- DE-A- 1 639 533
- US-A- 3 509 426

## Beschreibung

Die Erfindung bezieht sich auf einen Elektrolytkondensator mit einem Stapel Kondensatorelemente, wobei jedes Kondensatorelement eine Anodenfolie mit einer dielektrischen Oxidschicht sowie einer Kathodenkontaktschicht mit einem festen Elektrolytmaterial aufweist.

Die Erfindung bezieht sich ebenfalls auf ein Verfahren zum Herstellen eines Elektrolytkondensators, wobei Kondensatorelemente aus einer Anodenfolie mit einer dielektrischen Oxidschicht hergestellt werden, auf der eine Kathodenkontaktschicht mit einem festen Elektrolytmaterial angebracht wird, wonach eine Anzahl Kondensatorelemente zu einem Stapel zusammengefügt werden.

In der britischen Patentschrift GB 1225601 sind ein Elektrolytkondensator und ein Verfahren zum Herstellen desselben beschrieben, wobei eine Folie aus einem Ventilmetall, beispielsweise Aluminium oder Tantal, mit einer geschlossenen Oxidhaut versehen und in einem Niederschlagvorgang aus einer Lösung mit einer Schicht eines festen Elektrolytmaterials in Form eines elektrisch leitenden komplexen Salzes von Tetracyanochinodimethan (TCNQ) in einem polymeren Bindemittel bedeckt wird. In dem festen Elektrolytmaterial wird ein Kathodenkontaktstreifen eingebettet, wonach ein Wickel oder ein Stapel von Folien gebildet wird.

Zum Herstellen gedrängter Kondensatoren mit homogenen elektrischen Eigenschaften wird eine Konstruktion mit einer Mehrschichtstruktur in Form eines Stapels gleichförmiger Kondensatorelemente bevorzugt. Dies ist beispielsweise bei Gebrauch im Bereich hoher elektrischer Frequenzen von Bedeutung. Der Elektrolytkondensator der in der genannten britischen Patentschrift beschriebenen Art lässt sich nicht auf einfache Weise in einer Mehrschichtstruktur ausbilden. Die Art und Weise, wie der Kathodenkontakt angebracht wird, ist wenig zuverlässig. Das feste Elektrolytmaterial weist durch das vorhandene polymere Bindemittel eine verringerte Leitfähigkeit auf und der Kontakt mit der Oxidhaut ist unzureichend, insbesondere in den (engen) Poren der Anodenfolie. Poren in der Anodenfolie vergrössern die Oberfläche der Folie und folglich die Kapazität des Kondensators.

Die Erfindung hat nun zur Aufgabe, einen Elektrolytkondensator einer einfachen Konstruktion zu schaffen, der sich auf einfache Art und Weise herstellen lässt. Der Kondensator soll gedrängt sein und sich dazu eignen, in Form eines anschlussdrahtlosen elektronischen Bauteils ausgebildet zu werden. Der Elektrolytkondensator soll einen Aufbau aufweisen, bei dem flache Folien verwendet werden können. Vorteilhaft dabei ist es, dass die Oxidhaut nicht beschädigt wird, wie dies in einem Wickel beim Wickeln passieren kann, wodurch Kurzschluss vermieden und das Auftreten von Leckströmen ausgeschlossen wird. Die selbstwiederherstellenden Eigenschaften des Elektrolytkondensators werden dann möglichst wenig beansprucht. Ein weiterer Vorteil eines flachen Aufbaus der Kondensatorelemente ist die Möglichkeit, spröde Folien zu verwenden, beispielsweise Folien, in denen zum Erhalten einer grossen Oberfläche tiefe Poren eingeätzt sind. Ausserdem hat die Erfindung zur Aufgabe, einen Elektrolytkondensator zu schaffen, in dem eine genau bemessene und vorzugsweise möglichst geringe Menge des festen Elektrolytmaterials verwendbar ist. Die Erfindung bezweckt weiterhin eine Konstruktion für einen gestapelten Elektrolytkondensator zu schaffen, wobei es möglich ist, den Kontakt zwischen den Kondensatorelementen in dem Stapel auf eine zuverlässige Weise herzustellen, vorzugsweise in einem nicht-kapazitiv verwendeten Teil der Anodenfolien. Die Erfindung bezweckt ebenfalls ein auf einfache Weise zu mechanisierendes Verfahren zum Herstellen eines Elektrolytkondensators zu schaffen.

Diese Aufgabe wird nach der Erfindung erfüllt durch einen Elektrolytkondensator der eingangs beschriebenen Art, der das Kennzeichen aufweist, dass die Kathodenkontaktschicht eine poröse keramische Distanzschicht aufweist, in der das feste Elektrolytmaterial imprägniert ist.

Eine Ausführungsform des Elektrolytkondensators nach der Erfindung mit einer äusserst geringen Gefahr vor Kurzschluss zwischen der Anode und der Kathode weist das Kennzeichen auf, dass die Oberfläche der Anodenfolie gemäss einem gewünschten Muster in aktive und nicht-aktive Teile aufgeteilt ist, wobei die aktiven Teile mit der Kathodenkontaktschicht bedeckt sind, wobei die nicht-aktiven Teile der Oberfläche und ein Teil der Ränder der Anodenfolie mit einer Isolierschicht bedeckt sind und wobei über die Isolierschicht eine elektrisch leitende Schicht angebracht ist, und zwar von einem isolierten Rand der Folie bis an den aktiven Teil der Oberfläche.

In einer wirtschaftlichen Ausführungsform des erfindungsgemässen Elektrolytkondensators weist die Oberfläche der Anodenfolie auf beiden Seiten aktive Teile auf.

Besonders zuverlässige elektrisch leitende Verbindungen zwischen den Kathoden der Kondensatorelemente werden dadurch erhalten, dass die elektrisch leitende Schicht den isolierten Rand der Folie wenigstens teilweise bedeckt.

In einer bevorzugten Ausführungsform des erfindungsgemässen Elektrolytkondensators sind die Kathodenkontaktschichten der Kondensatorelemente in dem Stapel über die elektrisch leitenden Schichten an dem Rand der Folien miteinander verbunden.

Vorzugsweise sind die Anoden der Kondensatorelemente in dem Stapel über nicht-isolierte Ränder der Folie elektrisch miteinander verbunden.

Als festes Elektrolytmaterial kann auf an sich bekannte Weise ein halbleitendes Oxid, wie Mangandioxid, ggf. in Kombination mit Graphit oder einem leitenden Polymer verwendet werden. In einer bevorzugten Ausführungsform des erfindungsgemässen Elektrolytkondensators weist das feste Elektrolytmaterial ein TCNQ-Salz auf. Geeignete Stoffe, die in geschmolzener Form angebracht werden können, sind in der Europäischen Patentanmeldung EP 152082 und in der US Patentschrift US 4590541 beschrieben.

Ein hinzukommender Vorteil des erfindungsgemässen Elektrolytkondensators ist die Möglichkeit, auf einfache Weise einen Kondensator für einen breiten Frequenzbereich dadurch zu schaffen, dass in dem Stapel parallel zueinander Kondensatorelemente mit hoch- und schwachgebeizten Anodenfolien verwendet werden. Hochgebeizte Folien mit vielen engen Poren und einer grossen Oberfläche, schaffen eine grosse Kapazität. Schwachgebeizte Folien schaffen dagegen einen niedrigen Reihenwiderstand, wodurch die elektrischen Eigenschaften bei hohen Frequenzen verbessert werden.

Die Aufgabe, ein Verfahren zum Herstellen eines Elektrolytkondensators zu schaffen, wird nach der Erfindung erfüllt durch ein Verfahren der eingangs beschriebenen Art, wobei die Oberfläche der Anodenfolie nach einem gewünschten Muster in aktive und nicht-aktive Teile verteilt wird, wobei die aktiven Teile mit der Kathodenkontaktschicht bedeckt werden, die eine poröse keramische Distanzschicht aufweist, in der das feste Elektrolytmaterial imprägniert wird, wobei die nicht-aktiven Teile der Oberfläche und ein Teile der Ränder der Anodenfolie mit einer Isolierschicht bedeckt werden und wobei über die Isolierschicht eine elektrisch leitende Schicht angebracht wird, und zwar von einem isolierten Rand der Folie bis an den aktiven Teil der Oberfläche.

Die Kathodenkontaktschichten der Kondensatorelemente in dem Stapel einerseits und die Anodenfolien andererseits werden je vorzugsweise über einen Stirnkontakt miteinander verbunden. Zum Erhalten einer zuverlässigen elektrisch leitenden Verbindung ist es zweckmässig, die zu kontaktierenden Teile des Stapels vor dem Anbringen der Stirnkontakte zu beizen. Verfahren zum Herstellen von Stirnkontakten sind in den US Patentschriften US 1098494 und US 4685027 beschrieben.

In einer besonders zweckmässigen Ausführungsform des erfindungsgemässen Verfahrens, wobei genau dosiert werden kann, werden die poröse Distanzschicht und/oder des feste Elektrolytmaterial im Siebdruckverfahren angebracht.

In der Deutschen Patentschrift DE 1639533 ist ein Elektrolytkondensator beschrieben, bei dem eine poröse, keramische Schicht verwendet wird. Dieser Kondensator besteht nicht aus einem Stapel Folien, sondern aus einem gesinterten Metallkörper, der zum Erhalten einer selbstwiederherstellenden Wirkung des Kondensators im Falle eines Kurzschlusses auf der Aussenseite mit einer Keramikschicht bedeckt ist.

Ein Ausführungsbeispiel der Erfindung ist in der Zeichnung dargestellt und wird im folgenden näher beschrieben. Es zeigen:
Fig. 1 eine schaubildliche Ansicht einer Anodenfolie mit aktiven und nicht-aktiven Teilen,
Fig. 2 teilweise in Ansicht, teilweise im Schnitt und teilweise weggeschnitten ein Kondensatorelement,
Fig. 3 eine schaubildliche Ansicht eines Stapels von Kondensatorelementen für eine Anzahl Kondensatoren und
Fig. 4 eine schaubildliche Ansicht eines erfindungsgemässen Elektrolytkondensators über einem Befestigungsrahmen.

### AUSFÜHRUNGSBEISPIEL

Nach diesem Ausführungsbeispiel wird eine gebeizte Anodenfolie aus Aluminium verwendet mit einer Kapazität von 10 bis 20 µF/cm² bei einer Folienspannung von 75 V. Die Anodenfolie mit einer Dicke von etwa 100 µm weist auf beiden Seiten Poren bis zu einer Teife von etwa 30 µm auf. Ein Bogen Anodenfolie zur Grösse von 400 x 500 mm² wird in einem Transportrahmen gespannt. Dieser Bogen reicht zum Herstellen von etwa 3500 Kondensatorelementen.

In einem Stanzvorgang wird die Folie mit Perforationen versehen, und zwar an denjenigen Stellen, an denen zwischen Kathodenkontakten Verbindungen angebracht werden. Gewünschtenfalls werden auch Zentrierlöcher oder Löcher zum Anbringen einer Hülle vorgesehen.

Die Anodenfolie wird mit einer Oxidhaut versehen, namentlich auch in den Poren, und zwar durch Formieren bei einer Formierspannung von 75 V während 30 Minuten in einer 5 Gew.%-igen Lösung von Ammoniumpentaborat in Wasser, wobei diese Lösung 0,1 Gew.% H₃PO₄ aufweist. Danach wird 15 Minuten lang in entmineralisiertem Wasser gespült und 5 bis 10 Minuten lang bei 105°C getrocknet.

Die Anodenfolie wird auf beiden Seiten nach einem gewünschten Muster im Siebdruckverfahren mit einer Isoliermaterialschicht bedeckt, wobei es von Bedeutung ist, dass die Ränder der Folien in den Perforationen auch bedeckt werden. Dadurch werden die Kathodenkontakte nachher gegenüber der Anodenfolie elektrisch isoliert. Als Isoliermaterial kann eine Lötmaskenschicht verwendet werden, wie diese bei gedruckten Schaltungsplatten üblich ist. Eine geeignetes Material ist beispielsweise ein UV-härtender Stoff auf Akrylbasis, Dynacure® Typ SM 15 LV der Firma Dynachem Corporation aus Tustin, Kalifornien, USA. Die Schicht wird mit einer Dicke von 15 µm angebracht und 2 Minuten lang durch Bestrahlung mit UV-Licht zum Aushärten gebracht.

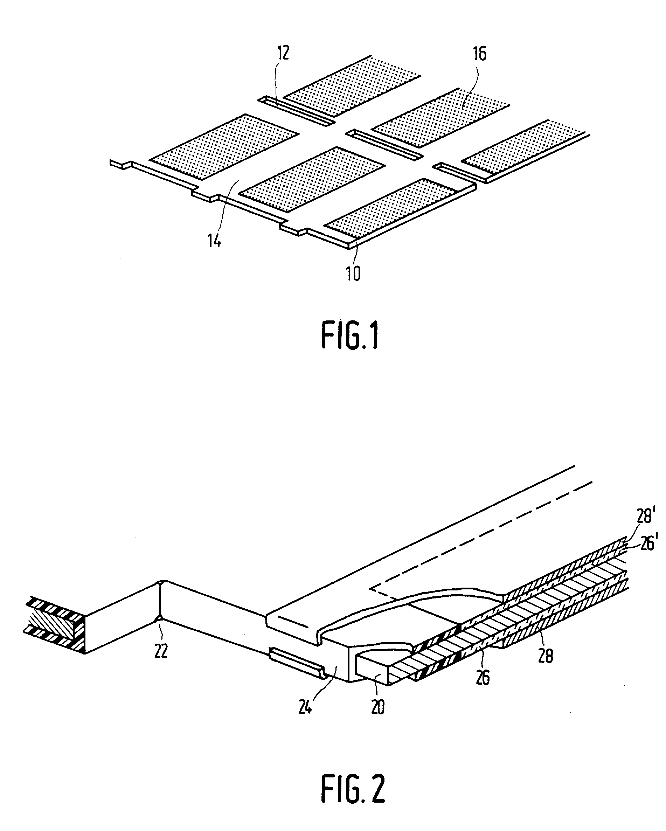

Fig. 1 zeigt einen Teil einer Anodenfolie 10 mit Perforationen 12 zum Hindurchführen der Kathodenkontakte. Die nicht schraffierten Teile 14 sind mit der Isoliermaterialschicht bedeckt und bilden die nicht-aktiven Teile der Oberfläche der Anodenfolie.

Die nicht-isolierten, aktiven Teile 16 der Folienoberfläche (siehe Fig. 1) werden im Siebdruckverfahren bedeckt, und zwar mit einem porösen keramischen Distanzmaterial, beispielsweise einer Suspension von Al₂O₃ in Wasser und Triäthylenglykol mit Polyvinylalkohol als Bindemittel. Die Aluminiumoxidteilchen haben Abmessungen von 1 bis 5 µm. Die Dicke der Schicht beträgt 15 µm. Die Schicht wird 5 Minuten lang durch IR-Bestrahlung bei Temperaturen von 105 bis 205°C getrocknet. Das freie Volumen der porÖsen Schicht beträgt 15%. Statt Al₂O₃ kann beispielsweise auch Bariumtitanat, Titandioxid, Quarz oder Glas verwendet werden.

Die Anodenfolie wird auf dieselbe Art und Weise wie obenstehend für die Formierbehandlung beschrieben, nachformiert. Gewünschtenfalls kann der genannte Formierschritt fortfallen und kann in diesem Stadium zum ersten Mal formiert werden.

Im Siebdruckverfahren wird eine Paste mit einem festen Elektrolytmaterial, beispielsweise mit Polyacrylonitril als Bindemittel und Dimethylformamid als Lösungsmittel, angebracht. Nach diesem Beispiel wird als Elektrolytmaterial BIC(TCNQ)₂ verwendet, wobei durch BIC das Kation N-(n-Butyl)-Isochinolin und durch TCNQ das Anion Tetracyanochinodimethan des komplexen Salzes bezeichnet wird. Die Paste wird in einer Dicke von 20 µm angebracht und im Vakuum oder in einem Schutzgas durch Bestrahlung mit IR-Licht während 5 bis 15 Minuten bei einer Temperatur von 50 bis 150°C getrocknet. Danach wird das Elektrolytmaterial durch eine kurze Erhitzung während höchstens 60 Sekunden bei einer Temperatur von 260°C in dem porösen Distanzmaterial und in den Poren der Anodenfolie imprägniert. Das feste Elektrolytmaterial kann statt im Siebdruckverfahren auch durch Eintauchen in eine Schmelze angebracht werden.

Fig. 2 zeigt eine Anodenfolie 20, mit in der Figur nicht dargestellten Poren und einer Oxidhaut, an der Stelle einer Perforation 22 zum Anbringen eines Kathodenkontaktes. Nicht-aktive Teile der Folien sind mit einer Isolierschicht 24 bedeckt, die aktiven Teile sind mit porösen Distanzschichten 26, 26′ bedeckt, in denen festes Elektrolytmaterial imprägniert ist.

Es werden Kathodenkontakte 28, 28′ von den aktiven Teilen der Oberfläche bis an und über den Rand der Perforation 22, in Fig. 2, angebracht. Dazu kann ein an sich bekannter leitender Klebstoff, beispielsweise eine Silberpaste mit einem Epoxyharz als Bindemittel verwendet werden. Gewünschtenfalls kann auch eine Metallschicht aufgedampft werden oder es ist eine Schicht der obenstehend beschriebenen Paste mit festem Elektrolytmaterial, dem ein Metallpulver, beispielsweise Silber, hinzugefügt worden ist, verwendbar.

Die Anodenfolie mit den darauf angebrachten Schichten wird aus dem Transportrahmen entfernt und auf beiden Seiten völlig mit Klebstoff, beispielsweise einem Epoxyharz, bedeckt. Eine Anzahl Folien (beispielsweise 5 bis 10) wird gestapelt, wobei der Stapel gewünschtenfalls mit einer Basisplatte und einer Abdeckplatte, vorzugsweise aus einem Isoliermaterial, versehen wird, wonach der Klebstoff zum Aushärten gebracht wird. Danach wird die Platte in nur einer Richtung zu Streifen gesägt, wobei jeweils ein Sägeschnitt durch die Perforationen und ein folgender Sägeschnitt durch die Anodenfolie hindurchgeht.

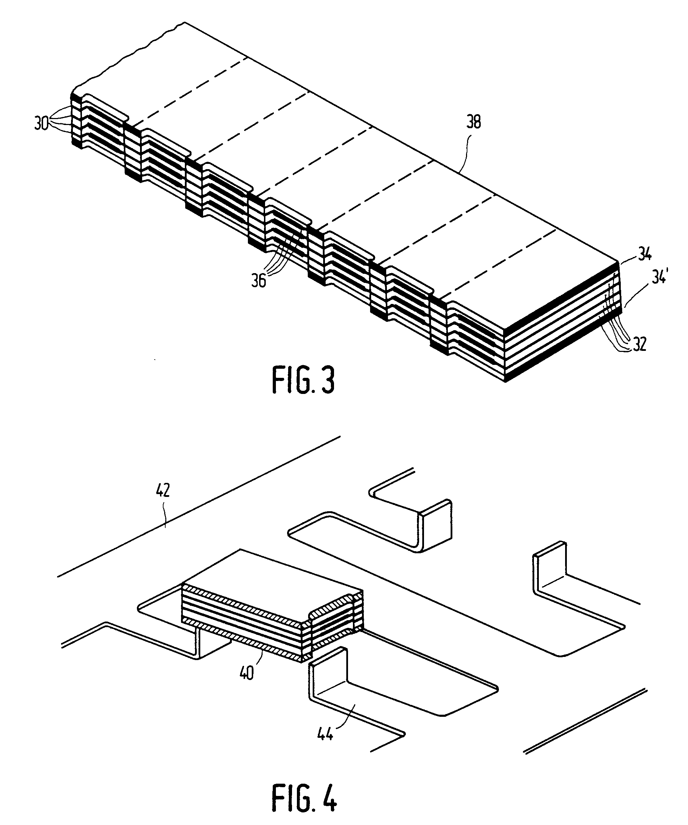

Fig. 3 zeigt einen Streifen von Kondensatorblöcken mit Anodenfolien 30 und zwischen denselben liegenden Klebstoffschichten 32 sowie mit Basis- und Abdeckplatten 34, 34′. An der Stelle der Perforationen sind die Kathodenkontakte 36 zugänglich, auf der anderen Seite 38 des Streifens ist die Anodenfolie zum Anbringen elektrischer Anschlüsse zugänglich.

Die Kondensatoren werden auf ein an sich, bekanntes Verfahren mit Stirnkontakten versehen, beispielsweise mittels eines leitenden Klebstoffes, wie Silberpaste, oder durch Aufdampfung einer Metallschicht durch Schoopieren oder auf der Anodenseite durch Laserschweissen. Der elektrische Kontakt auf der Anodenseite kann gewünschtenfalls dadurch verbessert werden, dass vor dem Anbringen des Stirnkontaktes örtlich eine Ätzbearbeitung durchgeführt wird, und zwar bei Verwendung von Mangandioxid als Kontaktmaterial beispielsweise mit einem Gemisch aus Zitronensäure und Wasserstoffperoxid.

Danach werden die Streifen in einer zweiten Richtung gesägt, und zwar zum Bilden der einzelnen Kondensatoren, beispielsweise mit Abmessungen 5 x 8 mm² und mit einer Dicke von 3 mm. In Fig. 4 ist ein Kondensator 40 dargestellt, der fertig ist in einem Befestigungsrahmen 42, beispielsweise aus Messing, verzinntem Eisen oder verzinntem Kupfer, befestigt zu werden. Die Befestigung erfolgt mittels eines leitenden Klebstoffes. Dieser Schritt lässt sich mit dem Anbringen der Stirnkontakte kombinieren.

Die Kondensatoren lassen sich auf übliche Weise in einem Umspritzungs- oder Umgussverfahren mit einem isolierenden Kunststoff umhüllen. Die Zungen 44 des Befestigungsrahmens können dabei zum Hinausführen der elektrischen Anschlüsse benutzt werden.

## Patentansprüche

1. Elektrolytkondensator mit einem Stapel Kondensatorelemente, wobei jedes Kondensatorelement eine Anodenfolie mit einer dielektrischen Oxidschicht sowie einer Kathodenkontaktschicht mit einem festen Elektrolytmaterial aufweist, **dadurch gekennzeichnet**, dass die Kathodenkontaktschicht eine poröse keramische Distanzschicht aufweist, in der das feste Elektrolytmaterial imprägniert ist.

2. Elektrolytkondensator nach Anspruch 1, **dadurch gekennzeichnet**, dass die Oberfläche der Anodenfolie gemäss einem gewünschten Muster in aktive und nicht-aktive Teile aufgeteilt ist, wobei die aktiven Teile mit der Kathodenkontaktschicht bedeckt sind, wobei die nicht-aktiven Teile der Oberfläche und ein Teil der Ränder der Anodenfolie mit einer Isolierschicht bedeckt sind und wobei über die Isolierschicht eine elektrisch leitende Schicht angebracht ist, und zwar von einem isolierten Rand der Folie bis an den aktiven Teil der Oberfläche.

3. Elektrolytkondensator nach Anspruch 1 oder 2, **dadurch gekennzeichnet**, dass die Oberfläche der Anodenfolie auf beiden Seiten aktive Teile aufweist.

4. Elektrolytkondensator nach Anspruch 2 oder 3, **dadurch gekennzeichnet**, dass die elektrisch leitende Schicht den isolierten Rand der Folie wenigstens teilweise bedeckt.

5. Elektrolytkondensator nach einem der Ansprüche 2 bis 4, **dadurch gekennzeichnet**, dass die Kathodenkontaktschichten der Kondensatorelemente in dem Stapel über die elektrisch leitenden Schichten an dem Rand der Folien miteinander verbunden sind.

6. Elektrolytkondensator nach einem der Ansprüche 1 bis 5, **durch gekennzeichnet**, dass die Anoden der Kondensatorelemente in dem Stapel über nicht-isolierte Ränder der Folie miteinander verbunden sind.

7. Elektrolytkondensator nach einem der Ansprüche 1 bis 6, **dadurch gekennzeichnet**, dass das feste Elektrolytmaterial ein TCNQ-Salz aufweist.

8. Elektrolytkondensator nach einem der Ansprüche 1 bis 7, **dadurch gekennzeichnet**, dass parallel zueinander in dem Stapel Kondensatorelemente mit hoch- und schwachgebeizten Anodenfolien verwendet werden.

9. Verfahren zum Herstellen eines Elektrolytkondensators, wobei Kondensatorelemente aus einer Anodenfolie mit einer dielektrischen Oxidschicht hergestellt werden, auf der eine Kathodenkontaktschicht mit einem festen Elektrolytmaterial angebracht wird, wonach eine Anzahl Kondensatorelemente zu einem Stapel zusammengefügt werden, **dadurch gekennzeichnet**, dass die Oberfläche der Anodenfolie gemäss einem gewünschten Muster in aktive und nicht-aktive Teile aufgeteilt ist, wobei die aktiven Teile mit der Kathodenkontaktschicht bedeckt werden, die eine poröse keramische Distanzschicht aufweist, in der das feste Elektrolytmaterial imprägniert wird, wobei die nicht-aktiven Teile der Oberfläche und ein Teil der Ränder der Anodenfolie mit einer Isolierschicht bedeckt werden und wobei über die Isolierschicht eine elektrisch leitende Schicht angebracht wird, und zwar von einem isolierten Rand der Folie bis an den aktiven Teil der Oberfläche.

10. Verfahren nach Anspruch 9, **dadurch gekennzeichnet**, dass die Kathodenkontaktschichten der Kondensatorelemente in dem Stapel über einen Stirnkontakt miteinander verbunden werden.

11. Verfahren nach Anspruch 9 oder 10, **dadurch gekennzeichnet**, dass die Anoden der Kondensatorelemente in dem Stapel über einen Stirnkontakt miteinander verbunden werden.

12. Verfahren nach Anspruch 11, **dadurch gekennzeichnet**, dass die zu kontaktierenden Teile des Stapels vor dem Anbringen der Stirnkontakte gebeizt werden.

13. Verfahren nach einem der Ansprüche 9 bis 12, **dadurch gekennzeichnet**, dass die poröse Distanzschicht im Siebdruckverfahren angebracht wird.

14. Verfahren nach einem der Ansprüche 9 bis 13, **dadurch gekennzeichnet**, dass das feste Elektrolytmaterial im Siebdruckverfahren angebracht wird.

## Claims

1. An electrolytic capacitor comprising a stack of capacitor elements, each capacitor element comprising an anode foil having a dielectric oxide layer as well as a cathode contact layer having a solid electrolytic material, characterized in that the cathode contact layer has a porous ceramic spacing layer which is impregnated with the solid electrolytic material.

2. An electrolytic capacitor as claimed in Claim 1, characterized in that in accordance with a desired pattern, the surface of the anode foil is divided into active and inactive portions, the active portions being covered with the cathode contact layer, and the inactive portions of the surface and a portion of the edges of the anode foil being coated with an insulating layer to which an electrically conductive layer is applied which extends from an insulated edge of the foil to the active portion of the surface.

3. An electrolytic capacitor as claimed in Claim 1 or 2, characterized in that the surface of the anode foil has active portions on both sides.

4. An electrolytic capacitor as claimed in Claim 2 or 3, characterized in that the electrically conductive layer at least partly covers the insulated edge of the foil.

5. An electrolytic capacitor as claimed in any one of the Claims 2 up to and including 4, characterized in that the cathode contact layers of the capacitor elements in the stack are interconnected through the electrically conductive layers at the edge of the foils.

6. An electrolytic capacitor as claimed in any one of the Claims 1 up to and including 5, characterized in that the anodes of the capacitor elements in the stack are interconnected through uninsulated edges of the foil.

7. An electrolytic capacitor as claimed in any one of the Claims 1 up to and including 6, characterized in that the solid electrolytic material comprises a TCNQ salt.

8. An electrolytic capacitor as claimed in any one of the having highly etched and little-etched anode foils are used which are arranged parallel to one another in the stack.

9. A method of manufacturing an electrolytic capacitor, in which capacitor elements are manufactured from an anode foil having a dielectric oxide layer on which a cathode contact layer having a solid electrolytic material is provided, after which a number of capacitor elements are formed into a stack, characterized in that the surface of the anode foil is divided into active and inactive portions in accordance with a desired pattern, the active portions being covered with the cathode contact layer which has a porous ceramic spacing layer into which the solid electrolytic material is impregenated, the inactive portions of the surface and a part of the edges of the anode foil being covered with an insulating layer to which an electrically conductive layer is applied which extends from an insulated edge of the foil to the active portion of the surface.

10. A method as claimed in Claim 9, characterized in that the cathode contact layers of the capacitor elements in the stack are connected to one another through an end contact.

11. A method as claimed in Claim 9 or 10, characterized in that the anodes of the capacitor elements in the stack are connected to one another through an end contact.

12. A method as claimed in Claim 11, characterized in that the portions of the stack to be contacted are etched before the end contacts are provided.

13. A method as claimed in any one of the Claims 9 up to and including 12, characterized in that the porous spacing layer is provided by means of screen printing.

14. A method as claimed in any one of the Claims 9 up to and including 13, characterized in that the solid electrolytic material is provided by means of screen printing.

## Revendications

1. Condensateur électrolytique présentant une pile d'éléments de condensateur, chaque élément de condensateur comportant une feuille anodique munie d'une couche d'oxyde diélectrique ainsi que d'une couche de contact cathodique présentant un matériau électrolytique solide, caractérisé en ce que la couche de contact cathodique présente une couche d'écartement céramique poreuse dans laquelle est imprégné le matériau électrolytique solide.

2. Condensateur électrolytique selon la revendication 1, caractérisé en ce que la surface de la feuille anodique est divisée selon une configuration désirée en parties actives et parties non actives, dont les parties actives sont recouvertes de la couche de contact cathodique, alors que les parties non actives de la surface et une partie des bords de la feuille anodique sont recouvertes d'une couche isolante sur laquelle est appliquée une couche électro-conductrice, notamment à partir d'un bord isolé de la feuille jusqu'à la partie active de la surface.

3. Condensateur électrolytique selon la revendication 1 ou 2, caractérisé en ce que la surface de la feuille anodique présente des deux côtés des parties actives.

4. Condensateur électrolytique selon la revendication 2 ou 3, caractérisé en ce que la couche électroconductrice recouvre au moins partiellement le bord isolé de la feuille.

5. Condensateur électrolytique selon l'une des revendications 2 à 4, caractérisé en ce que les couches de contact cathodiques des éléments de condensateur dans la pile sont reliées entre elles par l'intermédiaire des couches électroconductrices au bord des feuilles.

6. Condensateur électrolytique selon l'une des revendications 1 à 5, caractérisé en ce que les anodes des éléments de condensateur dans la pile sont reliées entre elles par l'intermédiaire de bords non isolés de la feuille.

7. Condensateur électrolytique selon l'une des revendications 1 à 6, caractérisé en ce que le matériau électrolytique solide est un sel de tétracyanoquinondiméthane (TCNQ).

8. Condensateur électrolytique selon l'une des revendications 1 à 7, caractérisé en ce que des éléments de condensateur présentant des feuilles anodiques fortement et faiblement décapées sont utilisées parallèlement dans la pile.

9. Procédé pour la fabrication d'un condensateur électrolytique selon lequel des éléments de condensateur sont réalisés à partir d'une feuille anodique présentant une couche d'oxyde diélectrique, sur laquelle est appliquée une couche de contact cathodique présentant un matériau électrolytique solide, après quoi plusieurs éléments de condensateur sont réunis de façon à former une pile, caractérisé en ce que la surface de la feuille anodique est divisée selon une configuration désirée en parties actives et non actives, dont les parties actives sont recouvertes de la couche de contact cathodique qui présente une couche d'écartement céramique poreuse dans laquelle est imprégné le matériau électrolytique solide, alors que les parties non actives de la surface et une partie des bords de la feuille anodique sont recouvertes d'une couche isolante sur laquelle est appliquée une couche électroconductrice, notamment à partir du bord isolé de la feuille jusqu'à la partie active de la surface.

10. Procédé selon la revendication 9, caractérisé en ce que les couches de contact cathodiques des éléments de condensateur dans la pile sont reliées entre elles par l'intermédiaire d'un contact terminal.

11. Procédé selon la revendication 9 ou 10, caractérisé en ce que les anodes des éléments de condensateur dans la pile sont reliées entre elles par l'intermédiaire d'un contact terminal.

12. Procédé selon la revendication 11, caractérisé en ce que les parties en contact de la pile sont soumises à un décàpage avant la disposition des contacts terminaux.

13. Procédé selon l'une des revendications 9 à 12, caractérisé en ce que la couche d'écartement est appliquée par un processus de sérigraphie.

14. Procédé selon l'une des revendications 9 à 13, caractérisé en ce que le matériau électrolytique solide est appliqué par un processus de sérigraphie.
